# EUROPEAN PATENT APPLICATION

(11) **EP 3 666 839 A1**
(43) Date of publication of application: **17.06.2020**
(21) Application number: 19216110.7
(22) Date of filing: 13.12.2019
(51) Int. Cl.: C09J 5/00, B23K 26/00

(54) **LASER SURFACE TEXTURE FOR ADHESIVE BONDING OF METALS**

(30) Priority: 14.12.2018 US 201816220819
(71) Applicant: United Technologies Corporation, Farmington, CT 06032 (US)
(72) Inventor: THAYER, Henry H., Wethersfield, CT Connecticut 06109 (US); BURLATSKY, Sergei F., West Hartford, CT Connecticut 06117 (US); NOVIKOV, Dmitri, Avon, CT Connecticut 06001 (US); EL-WARDANY, Tahany Ibrahim, Vernon, CT Connecticut 06066 (US)
(74) Representative: Dehns

(57) **Abstract**

A joined article (20; 40) includes a first metal piece (22; 42) with a first bonding surface (24; 44), having one or more recessed areas (26, 28; 46), a second metal piece (30; 48) with a second bonding surface (32; 50) with the second bonding surface (32; 50) having one or more recessed areas (34, 36; 52), and an adhesive layer (38; 54) between the first bonding surface (24; 44) of the first metal piece (22; 42) and the second bonding surface (32; 50) of the second metal piece (30; 48). The adhesive layer (38; 54) occupies a space between the first and second bonding surfaces (24, 32; 44, 50) and occupies the recessed areas (26, 28, 34, 36; 46, 52) of both the first and second bonding surfaces (24, 32; 44, 50) of the first and second metal pieces (22, 30; 42, 48).

## Description

### BACKGROUND

The present disclosure relates to the joining of metallic materials together with adhesives. More specifically, the present disclosure relates to creating surface features on metallic materials to strengthen the adhesive bond joining the metallic materials together.

Many metals and metallic alloys may be welded together offering an alternative to adhesive joining. However, certain classes of metals and metallic alloys are not amenable to the welding process and are frequently referred to as "crack alloys." These "crack alloys" undergo cracking during the welding or cooling process at the joint welds and result in very weak bonds which are unsuitable for the stresses present during the flight of an aircraft. Adhesive joining of these metallic materials may provide a better alternative to joining these metallic materials together.

Surface preparation is one of the main challenges for adhesive bonding of metallic surfaces in the aerospace industry, both in consistent quality and productivity. Metallic surfaces often contain oxides and lubricant oils that are detrimental to adhesive joining. Also, the metallic surfaces may be too smooth to allow an excellent mechanical bond to form with the adhesive.

Surface treatments aim at modifying the metallic surface to attain contaminant removal, wettability with either primer or adhesive, and highly roughened surfaces. Traditional surface preparation techniques for metallic materials used in the industry for bonding metallic materials include grit blasting, solvent wiping followed by abrading (with a ScotchBrite® pad), or anodization. The first two are more common, whereas anodization is more commonly seen in aerospace applications where this more expensive and rigorous preparation is necessary to meet stringent specifications. Grit blasting and abrasion techniques are inherently variable processes, a more controlled process would be desirable.

To date, joining metallic materials is accomplished by using specially formulated adhesives coupled with extensive surface preparation techniques. These processes are empirical, employing several steps, such as labor-intensive surface preparation methods that are incompatible with the degree of automation required in aerospace manufacturing applications. In addition to the cost and floor space requirements, manual surface preparation introduces a significant variability in the overall joint integrity.

### SUMMARY

In accordance with a first aspect of the present disclosure, a joined article includes a first metal piece with a first bonding surface, having one or more recessed areas, a second metal piece with a second bonding surface with the second bonding surface having one or more recessed areas, and an adhesive layer between the first bonding surface of the first metal piece and the second bonding surface of the second metal piece. The adhesive layer occupies a space between the first and second bonding surfaces and occupies the recessed areas of both the first and second bonding surfaces of the first and second metal pieces.

In accordance with a second aspect of the present disclosure, a method of forming a joined article includes laser etching a first metal piece to form recessed areas in a first bonding surface of the first metal piece. The method further includes laser etching a second metal piece to form recessed areas in a second bonding surface of the second metal piece. The method further includes applying an adhesive layer between the first bonding surface of the first metal piece and the second bonding surface of the second metal piece, where applying the adhesive layer fills a space between the first and second bonding surfaces and fills the recessed areas in the first and second bonding surfaces with adhesive.

### BRIEF DESCRIPTION OF THE DRAWINGS

FIGS. 1A-1C are perspective views of a laser etching apparatus creating surface features on a metal piece.
FIG. 2 is a cross-sectional view of two metal pieces with a first set of recessed surface features joined together by an adhesive layer.
FIG. 3 is a cross-sectional view of two metal pieces with a second set of recessed surface features joined together by an adhesive layer.

### DETAILED DESCRIPTION

The present disclosure relates to creating surface features on metallic materials and joining them together using an adhesive. Various components in an aircraft, such as a fan blade, ducting, or nacelle frequently require metal pieces be joined together. Chemical bonds can be formed among an adhesive layer, which is set between two adjoining metal pieces, and each of the metal pieces. However, a mechanical strength aspect to the joined metals can be added through laser etching, prior to addition of the adhesive. The added surface features by laser etching results in a joined article which is more resistant to shear forces present during the operation of an aircraft.

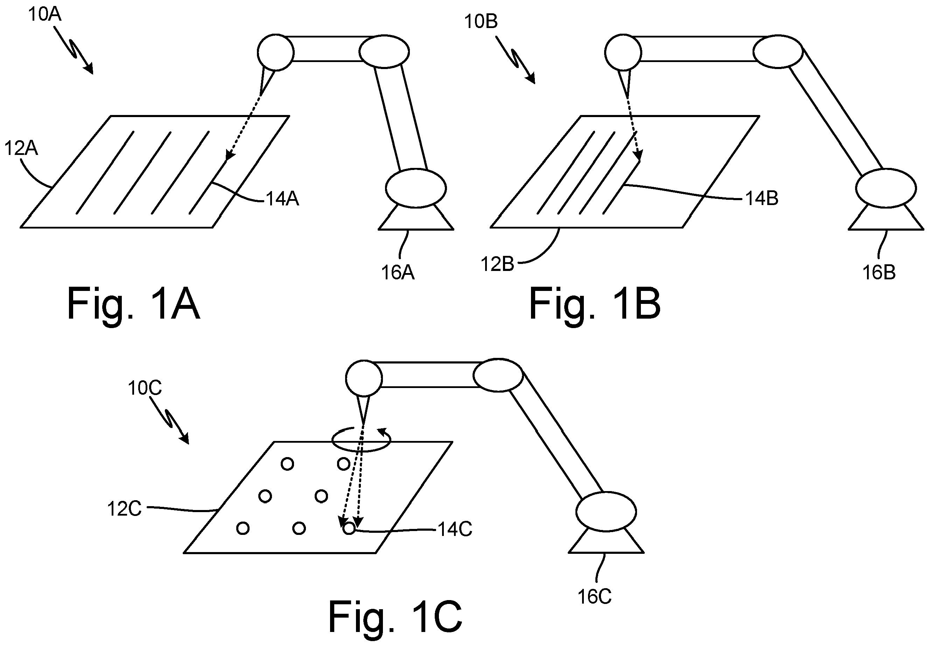

FIGS. 1A-1C are perspective views of a laser etching apparatus creating surface features on a metal piece. FIG. 1A shows laser etching system 10A, metal piece 12A, surface feature 14A, and laser apparatus 16A. Laser etching system 10A can be used with metal piece 12A, which can be any metal or metallic alloy. Laser etching system 10A creates surface feature 14A on metal piece 12A using laser apparatus 16A, which can be carefully controlled to direct a laser beam (shown by a dashed line in FIG. 1A) that impinges on metal piece 12A. The laser beam is able to remove surface particles from metal piece 12A creating surface feature 14A. The angle and duration of the laser beam impingement can be varied to create surface feature 14A with recesses of desired dimensions and shape. For example, surface feature 14A can be a depression, cavity, or groove. Surface feature 14A can also include forming a pattern across metal piece 12A. As seen in FIG. 1A, for example, the pattern can form a series of parallel surface features.

FIG. 1B shows laser etching system 10B, metal piece 12B, surface feature 14B, and laser apparatus 16B. Laser etching system 10B can be used with metal piece 12B. Laser etching system 10B creates surface feature 14B on metal piece 12B using laser apparatus 16B, which can be carefully controlled to direct a laser beam (shown by a dashed line in FIG. 1B) that impinges on metal piece 12B. The laser beam is able to remove surface particles from metal piece 12B creating surface feature 14B. As seen in FIG. 1B, the angle of the laser beam impingement is varied to create surface feature 14B. As such, surface feature 14B is an undercut, which can result in the recessed area approximating the shape of a trapezoidal prism. Surface feature 14B can also include forming a pattern across metal piece 12B. As seen in FIG. 1B, for example, the pattern can form a series of parallel undercuts.

FIG. 1C shows laser etching system 10C, metal piece 12C, surface feature 14C, and laser apparatus 16C. Laser etching system 10C can be used with metal piece 12C. Laser etching system 10C creates surface feature 14C on metal piece 12C using laser apparatus 16C, which can be carefully controlled to direct a laser beam (shown by a dashed line in FIG. 1C) that impinges on metal piece 12C. The laser beam is able to remove surface particles from metal piece 12C creating surface feature 14C. The angle of the laser beam impingement can be varied to create surface feature 14C, which can include an undercut. The undercut can result in the recessed area approximating the shape of a conical frustrum (shown in FIG. 1C where the angled laser beam travels a circular path). Surface feature 14C can also include forming a pattern across metal piece 12C.

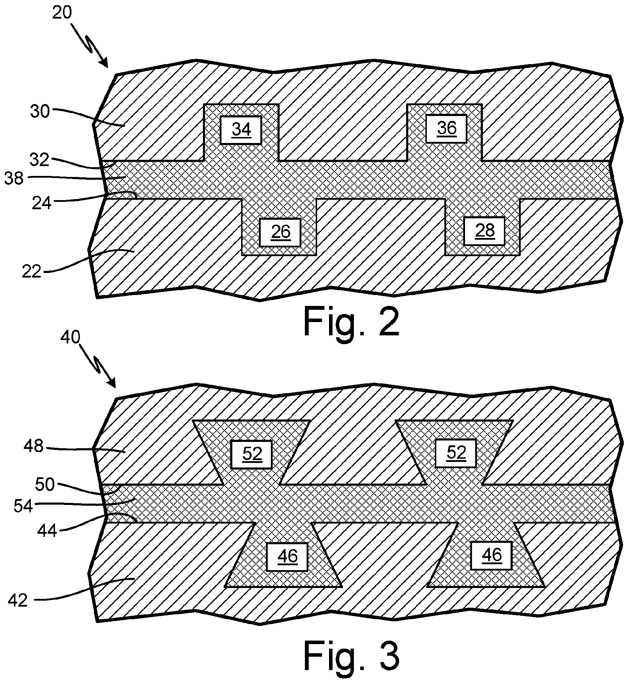

FIG. 2 is a cross-sectional view of two metal pieces with a first set of surface features joined together by an adhesive layer. FIG. 2 shows joined article 20, first metal piece 22, first bonding surface 24, first surface features 26 and 28, second metal piece 30, second bonding surface 32, second surface features 34 and 36, and adhesive layer 38.

Joined article 20 can be mounted as any component part within an aircraft where the temperature of the component in the aircraft remains below an adhesive failure temperature. For example, some adhesives can become flammable above certain temperatures. As such, component parts can be provided for cold side components which can include components such as a fan blade, ducting, or nacelle.

Joined article 20 includes first metal piece 22 with first bonding surface 24. A laser apparatus (not shown in FIG. 2) directs a laser beam which impinges on first bonding surface 24. The laser beam vaporizes a portion of first bonding surface 24 etching surface feature 26 into first bonding surface 24. The laser beam is then aimed at a new region on first bonding surface 24 where the laser beam vaporizes a portion of first bonding surface 24 etching surface feature 28 into first bonding surface 24. First surface features 26 and 28 are recesses in FIG. 2 and can be depressions, cavities, or grooves in alternate embodiments. First surface features 26 and 28 can be substantially the same surface feature or be different surface features. Surface feature 26 can be used by itself, or a plurality of surface features can be used. The plurality of surface features can form a specific pattern such as, for example, a series of parallel cavities or grooves.

Joined article 20 also includes second metal piece 30 with second bonding surface 32. Second metal piece 30 may be formed of the same metal or alloy as first metal piece 22 or second metal piece 30 may be formed of a different metal or alloy as first metal piece 22. A laser apparatus (not shown in FIG. 2) directs a laser beam which impinges on second bonding surface 32. The laser beam vaporizes a portion of second bonding surface 32 etching surface feature 34 into second bonding surface 32. The laser beam is then aimed at a new region on second bonding surface 32 where the laser beam vaporizes a portion of second bonding surface 32 etching surface feature 36 into second bonding surface 32. Second surface features 34 and 36 are recesses in FIG. 2 and can be depressions, cavities, or grooves in alternate embodiments. Second surface features 34 and 36 can be substantially the same surface feature or be different surface features. Surface feature 34 can be used by itself, or a plurality of surface features can be used. The plurality of surface features can form a specific pattern such as, for example, a series of parallel cavities or grooves.

Joined article 20 also includes adhesive layer 38. First bonding surface 24 of first metal piece 22 is placed adjacent to second bonding surface 32 of second metal piece 30. Adhesive layer 38 is then placed in between first bonding surface 24 of first metal piece 22 and second bonding surface 32 of second metal piece 30. Adhesive layer 38 penetrates and fills with adhesive first surface features 26 and 28 and second surface features 34 and 36.

While the adhesive bonds with the bonding surface of the metal, the addition of surface features adds a mechanical strength aspect to the joined article. This can result in a joined article which is more resistant to shear forces that are present during flight of an aircraft. The surface features can be arranged in various patterns on the bonding surface of the metal pieces. Each metal or alloy can have a different pattern optimized to the geometry of each piece; the type of metal or alloy present; and to add enough mechanical strength to the joined article such that the joined article is able to withstand the forces present within the working environment of an aircraft.

As FIG. 2 shows, first surface feature 26 of first metal piece 22 overlaps with second surface feature 34 of second metal piece 30 by approximately 50%. The surface features on adjacent metal pieces can also have overlap of substantially 100% or not overlap at all. The plurality of surface features on adjacent metal pieces can have the same shape or have different shapes and can form the same pattern or different patterns. The plurality of surface features on each metal piece can also be the same shape or form a plurality of shapes.

FIG. 3 is a cross-sectional view of two metal pieces with a second set of surface features joined together by an adhesive layer. FIG. 3 shows joined article 40, first metal piece 42, first bonding surface 44, first surface features 46, second metal piece 48, second bonding surface 50, second surface features 52, and adhesive layer 54.

Joined article 40 includes first metal piece 42 with first bonding surface 44. A laser apparatus (not shown in FIG. 3) directs a laser beam which impinges on first bonding surface 44. The laser beam vaporizes a portion of first bonding surface 44 etching first surface features 46 into first bonding surface 44. The laser beam is aimed at an angle such that first surface features 46 are undercut. Undercut means that the depression, cavity, or groove has a larger recessed area at the bottom of the depression, cavity, or groove than the top of the depression, cavity, or groove. The recessed area of first surface features 46 can, for example, approximate the shape of a trapezoidal prism or a conical frustrum.

Joined article 40 also includes second metal piece 48 with second bonding surface 50. A laser apparatus (not shown in FIG. 3) directs a laser beam which impinges on second bonding surface 50. The laser beam vaporizes a portion of second bonding surface 50 etching second surface features 52 into second bonding surface 50. The laser beam is aimed at an angle such that second surface features 52 are undercut. Joined article 40 also includes adhesive layer 54. First bonding surface 44 of first metal piece 42 is placed adjacent to second bonding surface 50 of second metal piece 48. Adhesive layer 54 is then placed in between first bonding surface 44 of first metal piece 42 and second bonding surface 50 of second metal piece 48. Adhesive layer 54 penetrates and fills with adhesive first surface features 46 and second surface features 52.

While the adhesive bonds with the bonding surface of the metal, the addition of surface features with an undercut adds an even greater mechanical strength aspect to the joined article. This can result in a joined article which is more resistant to shear forces that are present during flight of an aircraft. As shown in FIG. 3, the recessed area of surface features 46 and 52 can approximate the shape of a trapezoidal prism. The recessed area can also approximate, for example, the shape of a conical frustrum which can have the same shear strength from multiple directions within a plane. Whereas, a trapezoidal prism can have a greater shear strength in one direction versus another in the same plane. These properties can be selectively chosen for each joined article application so that a desired characteristic such as shear strength is achieved.

Laser etching allows the creation of these relatively complex surface features and allows their exact dimensions to be carefully controlled. As such, a joined article with a specific shear strength can much more readily be produced on a large scale meeting the stringent requirements of the aerospace manufacturing industry than previously possible with traditional surface preparation methods.

The terms, described herein, have the following meanings. Depression means an area where material has been removed from a bonding surface. Groove means an area where material has been removed from a bonding surface and has a generally linear structure relative to the bonding surface plane. Cavity means an area where material has been removed from a bonding surface and has a generally circular or elliptical structure relative to the bonding surface plane.

### Discussion of Possible Embodiments

The following are non-exclusive descriptions of possible embodiments of the present invention.

A joined article includes a first metal piece which has a first bonding surface, wherein the first bonding surface has one or more recessed areas; a second metal piece with a second bonding surface adjacent to the first bonding surface of the first metal piece, wherein the second bonding surface has one or more recessed areas; and an adhesive layer between the first metal piece and the second metal piece, wherein the adhesive layer occupies a space between the first and second bonding surfaces and the recessed areas of both the first and second bonding surfaces of the first and second metal pieces.

The article of the preceding paragraph can optionally include, additionally and/or alternatively, any one or more of the following:
The first metal piece and the second metal piece are formed of the same metal.

The first metal piece and the second metal piece are formed of different metals.

The recessed areas are grooves.

The recessed areas are depressions.

The recessed areas approximate a shape of a trapezoidal prism.

The recessed areas approximate the shape of a conical frustrum.

The first bonding surface has one or more recessed areas which include a plurality of undercut grooves and wherein the second bonding surface has one or more recessed areas which include a plurality of undercut grooves.

The first bonding surface has one or more recessed areas which include a plurality of undercut depressions and wherein the second bonding surface has one or more recessed areas which include a plurality of undercut depressions.

The joined article is part of an aircraft component.

Part of the aircraft component is one of a fan blade, ducting in a gas turbine engine, or a nacelle.

A method of forming a joined article, the method includes laser etching a first metal piece to form recessed areas in a first bonding surface of the first metal piece; laser etching a second metal piece to form recessed areas in a second bonding surface of the second metal piece; and applying an adhesive layer between the first bonding surface of the first metal piece and the second bonding surface of the second metal piece, wherein applying the adhesive layer fills a space between the first and second bonding surfaces and the recessed areas in the first and second bonding surfaces with adhesive.

The method of the preceding paragraph can optionally include, additionally and/or alternatively, any one or more of the following:
The first metal piece and the second metal piece are formed of the same metal.

The first metal piece and the second metal piece are formed of different metals.

Laser etching the first metal piece includes forming undercuts associated with the recessed areas.

Laser etching the second metal piece includes forming undercuts associated with the recessed areas.

The recessed areas are grooves.

The recessed areas are depressions.

The grooves approximate a shape of a trapezoidal prism.

The depressions approximate the shape of a conical frustrum.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A joined article (20; 40) comprising:
a first metal piece (22; 42) which has a first bonding surface (24; 44), wherein the first bonding surface (24; 44) has one or more recessed areas (26, 28; 46);
a second metal piece (30; 48) with a second bonding surface (32; 50) adjacent to the first bonding surface (24; 44) of the first metal piece (22; 42), wherein the second bonding surface (32; 50) has one or more recessed areas (34, 36; 52); and
an adhesive layer (38; 54) between the first metal piece (22; 42) and the second metal piece (30; 48), wherein the adhesive layer (38; 54) occupies a space between the first and second bonding surfaces (24, 32; 44, 50) and the recessed areas (26, 28, 34, 36; 46, 52) of both the first and second bonding surfaces (24, 32; 44, 50) of the first and second metal pieces (22, 30; 42, 48).

2. The article of claim 1, wherein the first metal piece (22; 42) and the second metal piece (30; 48) are formed of the same metal.

3. The article of claim 1, wherein the first metal piece (22; 42) and the second metal piece (30; 48) are formed of different metals.

4. The article of any preceding claim, wherein the recessed areas (26... 52) are grooves or depressions.

5. The article of any preceding claim, wherein the recessed areas (26... 52) approximate the shape of a trapezoidal prism or a conical frustrum.

6. The article of any preceding claim, wherein the first bonding surface (24; 44) has one or more recessed areas (26, 28; 46) which include a plurality of undercut grooves or depressions and wherein the second bonding surface (32; 50) has one or more recessed areas (34, 36; 52) which include a plurality of undercut grooves or depressions.

7. The article of any preceding claim, wherein the joined article (20; 40) is part of an aircraft component.

8. The article of claim 7, wherein part of the aircraft component is one of a fan blade, ducting in a gas turbine engine, or a nacelle.

9. A method of forming a joined article (20; 40), the method comprising:
laser etching a first metal piece (22; 42) to form recessed areas (26, 28; 46) in a first bonding surface (24; 44) of the first metal piece (22; 42);
laser etching a second metal piece (30; 48) to form recessed areas (34, 36; 52) in a second bonding surface (32; 50) of the second metal piece (30; 48); and
applying an adhesive layer (38; 54) between the first bonding surface (24; 44) of the first metal piece (22; 42) and the second bonding surface (32; 50) of the second metal piece (30; 48), wherein applying the adhesive layer (38; 54) fills a space between the first and second bonding surfaces (24, 32; 44, 50) and the recessed areas (26, 28, 34, 36; 46, 52) in the first and second bonding surfaces (24, 32; 44, 50) with adhesive.

10. The method of claim 9, wherein the first metal piece (22; 42) and the second metal piece (30; 48) are formed of the same metal.

11. The method of claim 9, wherein the first metal piece (22; 42) and the second metal piece (30; 48) are formed of different metals.

12. The method of any of claims 9 to 11, wherein laser etching the first metal piece (22; 42) includes forming undercuts associated with the recessed areas (26, 28; 46).

13. The method of any of claims 9 to 12, wherein laser etching the second metal piece (30; 48) includes forming undercuts associated with the recessed areas (34, 36; 52).

14. The method of any of claims 9 to 13, wherein the recessed areas (26... 52) are grooves or depressions.

15. The method of claim 14, wherein the grooves or depressions approximate the shape of a trapezoidal prism or a conical frustrum.
